# EUROPÄISCHE PATENTSCHRIFT

(11) **EP 1 701 054 B1**
(45) Veröffentlichungstag und Bekanntmachung des Hinweises auf die Patenterteilung: **20.02.2008**
(21) Anmeldenummer: 05027307.7
(22) Anmeldetag: 14.12.2005
(51) Int. Cl.: F16D 55/36

(54) **Mehrscheibenbremse für Fahrzeuge**
Multi-disc brake for vehicles
Frein multidisques pour véhicules

(30) Priorität: 09.03.2005 DE 102005010758
(43) Veröffentlichungstag der Anmeldung: 13.09.2006
(73) Patentinhaber: AUDI AG, 85045 Ingolstadt (DE)
(72) Erfinder: Waninger, Robert, 85055 Ingolstadt (DE)
(74) Vertreter: Asch, Konrad

(56) Entgegenhaltungen:
- WO-A-00/66907
- US-A- 3 994 378
- US-A- 5 937 985
- US-A1- 2004 055 834

## Beschreibung

Die Erfindung betrifft eine Mehrscheibenbremse für Fahrzeuge, insbesondere eine Doppelscheibenbremse für Kraftfahrzeuge, nach dem Oberbegriff des Anspruchs 1.

Mehrscheibenbremsen mit mehreren hintereinander angeordneten Bremsscheiben an Rädern von Kraftfahrzeugen sind allgemein bekannt, so z. B. aus der WO 00/66907 A1 in Verbindung mit einer Doppelscheibenbremse, bei der pro Fahrzeugrad zwei Bremsscheiben vorgesehen sind, die auf einer Nabe in Axialrichtung der Bremsscheiben gesehen verlagerbar sind. Den Bremsscheiben sind Bremsbeläge tragende Belagplatten zugeordnet, die wenigstens zum Teil ebenfalls verschiebbar gelagert sind. Konkret ist in einem Bremsscheibenzwischenraum zwischen den beiden Bremsscheiben eine verschiebbare, mittlere Belagplatte angeordnet, die auf ihrer einer ersten Bremsscheibe zugeordneten ersten Seite einen ersten Bremsbelag und auf ihrer einer zweiten Bremsscheibe zugeordneten zweiten Seite einen zweiten Bremsbelag trägt. Auf der dem Bremsscheibenzwischenraum abgewandten Seite jeder Bremsscheibe ist zudem jeweils eine Belagplatte mit äußerem Bremsbelag vorgesehen. Eine derartige Doppelscheibenbremse weist somit bei einer Bremsenbetätigung pro Rad vier Reibpunkte auf. Zur Bremsenbetätigung wird eine hydraulische Kolbeneinrichtung betätigt, die die verschiebbaren Bremsenbauteile in deren Reib- und Anlageverbindung drückt. Beim Lösen der Bremse besteht die Gefahr, dass sich die einzelnen Bremsbeläge nur schlecht von den Bremsscheiben ablösen und weiterhin an diesen anliegen, so dass die Bremsscheiben nur schlecht belüftet werden und damit nicht im erforderlichen Maße abgekühlt werden, was sich bei nachfolgenden Bremsvorgängen wiederum schlecht auf die Bremsleistung auswirken kann.

Aufgabe der Erfindung ist es daher, eine Mehrscheibenbremse für Fahrzeuge, insbesondere eine Doppelscheibenbremse für Kraftfahrzeuge, zu schaffen, mit der bei gelöster Bremse ein funktionssicheres Abkühlen der Bremsscheiben möglich ist.

Diese Aufgabe wird gelöst mit den Merkmalen des Anspruchs 1.

Die Mehrscheibenbremse weist Führungsmittel auf, mittels denen die während einer Bremsbetätigung in deren Reib- und Bremsstellung verlagerten Bremsscheiben und/oder Belagplatten bei einem Lösen der Bremse in eine Stellung überführbar sind, in der ein definiertes, vorgegebenes Lüftspiel zwischen den Bremsscheiben und den Bremsbelägen ausgebildet ist.

Mit einem derartigen Aufbau, der ein definiertes Lüftspiel zwischen den Bremsscheiben und den Bremsbelägen ausbildet, wird ein funktionssicheres Abkühlen der Bremsscheiben bei gelöster Bremse möglich, was wiederum dazu führt, dass für jeden Bremsvorgang die gewünschte Bremsleistung zur Verfügung steht.

Grundsätzlich gibt es verschiedene Möglichkeiten, die Bremsscheiben und/oder Belagplatten bei gelöster Bremse in eine Position zu überführen, in der diese ein definiertes Lüftspiel zwischen den Bremsscheiben und den Bremsbelägen ausbilden, so z. B. mittels Energiespeichern, z. B. Federelementen, die die Bremsscheiben und/oder Belagplatten mit einer Rückstellkraft beaufschlagen, die diese bei gelöster Bremse in eine gewünschte Position zwingen. Gemäß Anspruch 1 sind die Führungsmittel so ausgebildet und/oder angeordnet, dass die Bremsscheiben und/oder Bremsplatten in deren in die Reib- und Bremsstellung überführten Position elastisch verformt bzw. vorgespannt sind, so dass diese beim Lösen der Bremse in ihre definierte Lüftspiel-Stellung zurückfedern und/oder zurückgleiten. Dies kann z. B. in Verbindung mit den Bremsscheiben dadurch erreicht werden, dass die im Bereich einer zentralen Scheibenöffnung vorsprungartig ausgebildeten Scheibenfüße entlang ihres Verlagerungsweges nach einer bestimmten Wegstrecke blockiert werden bzw. gegen einen Anschlag laufen, so dass ein sich daran in Richtung Bremssattel anschließender restlicher Bremsscheibenbereich unter elastischer Verformung weiter in seine Reib- und Bremsstellung überführt wird.

Bevorzugt sind hierbei die Führungsmittel zwischen der Nabe und den Bremsscheiben bzw. analog zwischen den Belagplatten und einer Bremssatteleinrichtung ausgebildet und/oder angeordnet, so z. B. in Verbindung mit Bremsscheiben ausgebildet sein, die auf einer Nabe in herkömmlicher Weise lediglich geradlinig axial verschiebbar gelagert sind. Gemäß einer besonders bevorzugten Ausgestaltung nach Anspruch 3 ist jedoch vorgesehen, dass die Nabe zur Ausbildung eines Bestandteils der Führungsmittel an ihren Außenflächen voneinander beabstandete und jeweils gleich ausgebildete Nabennuten aufweist, die als schräg verlaufende Nabennuten unter einem vorgegebenen Winkel gegen die Längsachsenrichtung der Nabe geneigt sind und sich im Wesentlichen in Verschieberichtung über die Nabe erstrecken. Die vorsprungartig ausgebildeten Scheibenfüße der Bremsscheiben sind als weiterer Bestandteil der Führungseinrichtung bei einer derartigen Ausführungsform der Nabennuten entsprechend formangepasst an die Nabennutgeometrie ausgebildet, insbesondere mit einem parallelogrammartigen Querschnitt. Bei einer derartigen Ausbildung der Nabennuten und Scheibenfüße erfolgt die Bremsscheibenverlagerung über eine vorgegebene Wegstrecke schraubenartig. Um eine unerwünschte Blockade dieser Schraub-/Schiebebewegung zu vermeiden, weisen die zwischen benachbarten Scheibenfüßen liegenden Scheibenöffnungsbereiche, die insbesondere durch die Scheibenöffnungs-Grundkreisbereiche gebildet sind, jeweils einen vorgegebenen Spaltabstand zu den diesen jeweils zugeordneten und zwischen benachbarten Nabennuten liegenden Nabenstegen auf.

Mit einem derartigen Aufbau kann bei einer Bremsenbetätigung im Bereich der Nabennuten eine in etwa quer zur Längsachsen- bzw. Rotationsachsenrichtung wirkende Querkraftkomponente erzeugt werden, die als Haft- bzw. Reib-oder Haltekraft die Scheibenfüße in einer bestimmten Verschiebeposition hält, während der der sich daran in Richtung Bremssattel hin anschließende restliche Bremsscheibenbereich weiter in Längsachsenrichtung verlagert wird, so dass es insgesamt gesehen zu einer elastischen Verformung der Bremsscheibe kommt. Wird nun die Bremse gelöst, wirkt die Haltekraft im Scheibenfußbereich nach wie vor, so dass der relativ zum scheibenfußnahen Bereich weiter in Richtung Längsachse verformte Bremsscheibenbereich wieder in die Scheibenebene zurückfedert und somit ein Lüftspiel zwischen sich und demjenigen Bremsbelag ausbilden kann, von dem er zurückfedert. Mit diesem Zurückfedern einer bezogen auf eine Kolbeneinrichtung äußeren Bremsscheibe kann vorteilhaft gegebenenfalls auch gleichzeitig der im Bremsscheibenzwischenraum aufgenommene mittlere Bremsbelag bzw. dessen Belagplatte angestoßen und damit von der äußeren Bremsscheibe abgerückt werden. Dadurch lässt sich somit ein definiertes Lüftspiel zwischen den einzelnen verschiebbar gelagerten Bauteilen der Mehrscheibenbremse ausbilden.

In Verbindung mit einer derartigen Bremsscheibenlagerung auf der Nabe ist es besonders vorteilhaft, wenn auch die verlagerbaren Belagplatten, wie beispielsweise die mittlere Belagplatte mittels einer schräg verlaufenden Sattelnut an einer Bremssatteleinrichtung in analoger Weise elastisch verformt werden, wie dies Gegenstand der Patentansprüche 7 und 8 ist.

Zur Erhöhung der Haftkraft im Bereich der Scheibenfüße der Bremsscheiben kann nach Anspruch 4 vorgesehen sein, dass an den Scheibenfüßen wenigstens ein Federelement angeordnet ist, das mit einem Federteilbereich in einer Reibverbindung an wenigstens einem der an die jeweiligen Nabennut angrenzenden, erhabenen Nabenstege anliegt. Derartige Federelemente in Verbindung mit Scheibenfüßen von Bremsscheiben wurden bisher lediglich dazu verwendet, einen klapperfreien Aufbau herzustellen und um Querbewegungen zuzulassen. Die in Verbindung mit der erfindungsgemäßen Ausführung verwendeten Federelemente müssen jedoch so ausgelegt sein, dass diese zwingend eine die Scheibenfüße in ihrer Position haltende Haftkraft ausüben, um in Verbindung mit der schräg verlaufenden Nutgeometrie sicherzustellen, dass die Bremsscheiben in ihrer Reib- und Bremsstellung in der gewünschten Art und Weise elastisch verformt werden können.

Gemäß einer weiteren Ausgestaltung der Mehrscheibenbremse ist nach Anspruch 5 vorgesehen, dass die schräg verlaufenden Nabennuten mehrere, vorzugsweise zwei, mit unterschiedlichen Winkeln gegen die Längsachse der Nabe geneigte und in Richtung ihrer Längserstreckungsrichtung aneinander anschließende Nutteilbereiche aufweisen, wobei jeder Nutteilbereich einer Bremsscheibe zugeordnet ist und wobei die Nutteilbereiche nach Anspruch 6 vorzugsweise so ausgebildet sind, dass ein näher in Richtung einer Kolbeneinrichtung zur Betätigung der Mehrscheibenbremse liegender Nutteilbereich einen größeren Winkel einschließt als der sich daran in Richtung von der Kolbeneinrichtung weg anschließende Nutteilbereich. Diese Winkelung ist von Vorteil, da die innere, kolbenseitige Bremsscheibe aufgrund der Rückverlagerung der mittleren Belagplatte in Richtung auf diese zu einen weiteren Weg zurückzulegen hat als die kolbeneinrichtungsfernere Bremsscheibe, was durch den größeren Winkel des kolbeneinrichtungsnäheren Nutteilbereichs erreicht wird.

Mit Anspruch 9 ist eine konkrete Ausführungsform einer Mehrscheibenbremse als Doppelscheibenbremse mit zwei verlagerbaren Bremsscheiben, einer mittleren Belagplatte und äußeren Belagplatten bzw. Bremsbelägen beansprucht.

Die Erfindung wird nachfolgend anhand einer Zeichnung näher erläutert.

Es zeigen:
- Fig. 1: eine schematische Vorderansicht einer erfindungsgemäßen Doppelscheibenbremse,
- Fig. 2: eine schematische Schnittansicht entlang eines Teilbereichs der Linie A-A der Fig. 1,
- Fig. 3: eine schematische Darstellung einer zwei mit unterschiedlichen Winkeln ausgeführten schräg verlaufenden Nabennut,
- Fig. 4: eine schematische Prinzipskizze bei betätigter Doppelscheibenbremse, und
- Fig. 5: eine schematische Prinzipskizze bei gelöster Bremse und definiertem Lüftspiel zwischen den einzelnen Bremsscheiben und Bremsbelägen.

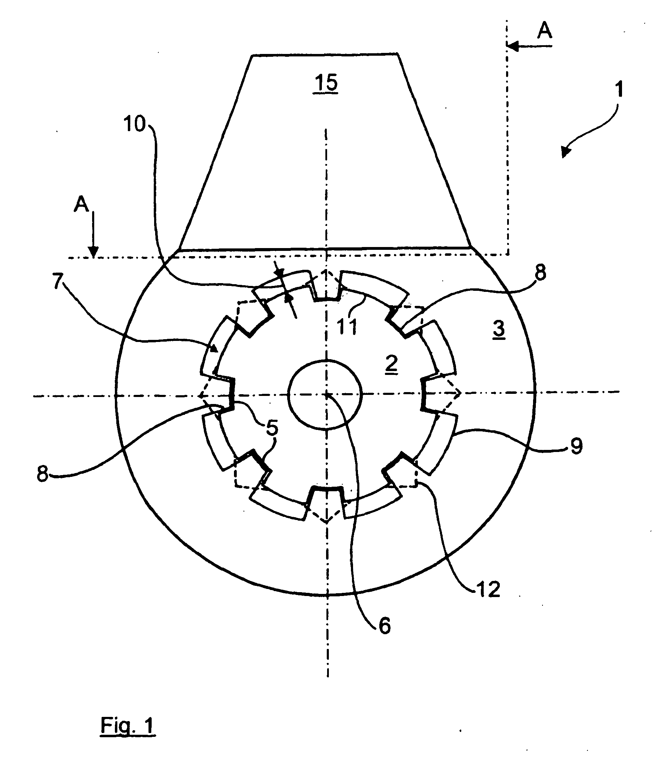

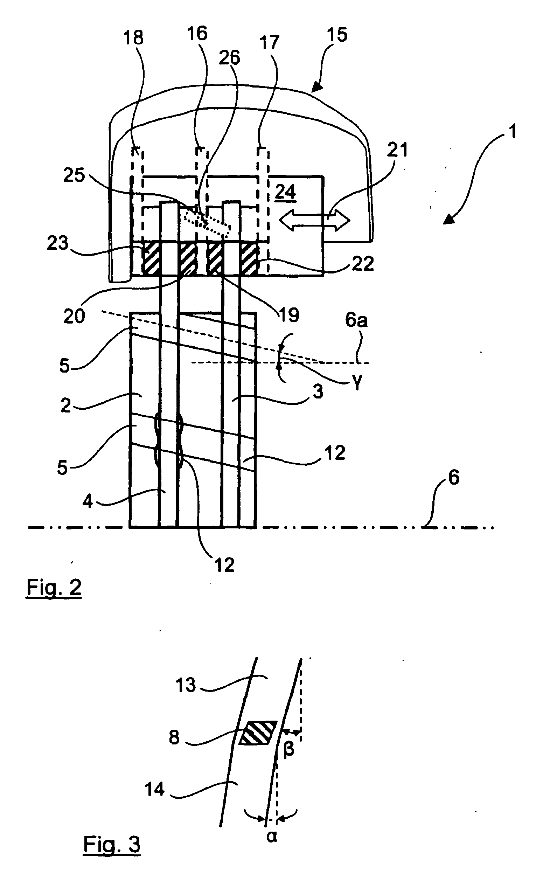

Fig. 1 zeigt eine schematische Vorderansicht als Draufsicht auf eine Doppelscheibenbremse 1, deren Aufbau in Verbindung mit der Fig. 2, die schematisch eine Teilschnittansicht entlang der Linie A-A der Fig. 1 zeigt, erläutert wird. Die Doppelscheibenbremse 1 umfasst zwei voneinander beabstandete und auf einer Nabe 2 verschiebbar gelagerten Bremsscheiben 3, 4. Die Nabe 2 weist an ihrer Außenfläche eine Mehrzahl von voneinander beabstandeten schräg verlaufenden Nabennuten 5 auf, die um einen vorgegebenen Winkel je gegen eine zur Rotationsachse 6 achsparallele Längsachsenrichtung 6a geneigt sind und sich schräg verlaufend über die Nabe 2 erstrecken.

Die Bremsscheiben 3, 4 weisen im Bereich einer zentralen Scheibenöffnung 7 jeweils eine Mehrzahl von voneinander beabstandeten und vorsprungartig ausgebildeten Scheibenfüßen 8 auf, die so an die Nabennutgeometrie formangepasst sind, insbesondere mit einem Formschluss, dass diese bei Bremsscheibenverlagerung schraubenartig über eine vorgegebene Wegstrecke in Richtung der Längsachse 6 verschiebbar in den Nabennuten 5 geführt sind.

Die zwischen den benachbarten Scheibenfüßen 8 liegenden Scheibenöffnungs-Grundkreisbereiche 9 weisen jeweils einen vorgegebenen Spaltabstand 10, zu den diesen zugeordneten, darunterliegenden erhabenen Nabenstegen 11 auf.

Wie dies in der **Fig.** 1 strichliert und in der **Fig. 2** lediglich in Verbindung mit der in der Bildebene unteren Nabennut beispielhaft und schematisch dargestellt ist, können an den Scheibenfüßen Federelemente 12 angeordnet sein, die mit einem Federteilbereich in einer Reibverbindung an den an die Nabennut angrenzenden erhabenen Nabenstegen 11 auf- bzw. anliegen.

Wie dies lediglich schematisch und beispielhaft in der **Fig. 3** dargestellt ist, können die schräg verlaufenden Nabennuten 5 auch zwei, mit unterschiedlichen Winkeln gegen die Längsachsenrichtung 6a geneigte und in Richtung ihrer Längserstreckungsrichtung aneinander anschließende Nutteilbereiche 13 und 14 aufweisen, wobei ein erster Nutteilbereich 13 näher in Richtung einer hier nicht im Detail dargestellten hydraulischen Kolbeneinrichtung liegt als ein sich daran anschließender Nutteilbereich 14. Der Nutteilbereich 13 schließt einen größeren Winkel β ein als der Nutteilbereich 14, der einen gegenüber dem Winkel β kleineren Winkel a einschließt. In Verbindung mit derartig mehrfach gewinkelten Nabennuten 5 ist die Geometrie der Scheibenfüße 8 entsprechend formangepasst auszubilden, um insbesondere im Bereich des Übergangs zwischen den beiden Nutteilbereichen 13, 14 keine unerwünschte Verklemmung des Scheibenfußes im Nabennutbereich zu erhalten.

Wie dies insbesondere der **Fig. 2** zu entnehmen ist, weist die Doppelscheibenbremse 1 ferner eine Bremssatteleinrichtung 15 auf, an der Bremsbeläge tragende Belagplatten 16, 17 und 18 zum Teil verschiebbar gelagert sind. So ist im Bremsscheibenzwischenraum zwischen den beiden Bremsscheiben 3 und 4 eine mittlere Belagplatte 16 angeordnet, die einen der ersten Bremsscheibe 3 zugeordneten ersten mittleren Bremsbelag 19 und einen der zweiten Bremsscheibe 4 zugeordneten zweiten mittleren Bremsbelag 20 trägt. Eine einer hier lediglich durch den Doppelpfeil 21 dargestellten Kolbeneinrichtung der Bremssatteleinrichtung 15 zugeordnete äußere bzw. bezogen auf ein Rad innere Belagplatte 17 weist ebenfalls einen der ersten Bremsscheibe 3 zugeordneten ersten äußeren Bremsbelag 22 auf. Eine der zweiten Bremsscheibe 4 zugeordnete äußere Belagplatte 18 trägt ebenfalls einen der zweiten Bremsscheibe 4 zugeordneten zweiten, äußeren Bremsbelag 23. In der vorliegend in der Fig. 2 dargestellten Ausführungsform einer Doppelscheibenbremse 1 ist die äußere Belagplatte 18 ortsfest an der Bremssatteleinrichtung 15 angeordnet und ist die innere Belagplatte 17 mit der hier nicht dargestellten Kolbeneinrichtung verbunden, so dass lediglich der mittleren Belagplatte 16 an einem Sattelträger 24 der Bremssatteleinrichtung 15 eine schräg verlaufende Sattelnut 25 zugeordnet ist, in der einer an der mittleren Belagplatte 16 formangepasst ausgebildeter Plattenfuß 26 über eine vorgegebene Wegstrecke verschiebbar geführt ist.

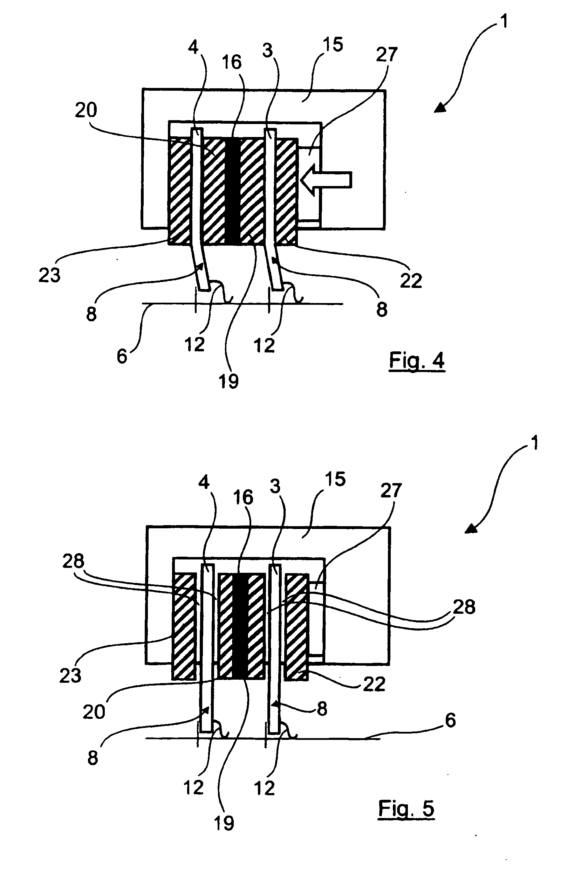

Die Funktionsweise der erfindungsgemäßen Doppelscheibenbremse 1 wird nachfolgend in Verbindung mit den lediglich äußerst schematischen Prinzipskizzen der **Fig. 4** und **5** näher erläutert. In der **Fig. 4** ist die Doppelscheibenbremse 1 in betätigtem Zustand gezeigt, bei der die hier schematisch dargestellte hydraulische Kolbeneinrichtung 27 die Bremsbeläge 19, 20, 22 und 23 in ihre entsprechende Brems- und Reibverbindung mit den beiden Bremsscheiben 3, 4 drückt. Wie dies in der **Fig. 4** lediglich äußerst schematisch und beispielhaft dargestellt ist, wird bei einer Bremsbetätigung im Bereich der schräg verlaufenden Nabennuten 5, in denen die Scheibenfüße der Bremsscheiben 3, 4 im Wesentlichen formschlüssig geführt sind, eine in etwa quer zur Rotationsachsenrichtung wirkende Querkraftkomponente erzeugt, die als Haft- bzw. Reib- oder Haltekraft die Scheibenfüße 8 in einer bestimmten Verschiebeposition zurückhält, während der sich daran in Richtung zu der Bremssatteleinrichtung 15 hin anschließende restliche Bremsscheibenbereich in Längsachsenrichtung als Rotationsrichtung weiter verlagert wird, so dass es insgesamt gesehen zu einer elastischen Verformung der Bremsscheiben 3, 4 kommt. Die Haft- und Haltekraft im Bereich der Scheibenfüße 8 wird hierbei durch die Federelemente 12 zudem verstärkt.

Wird nun die Bremse gelöst, wie dies in der **Fig. 5** ebenfalls lediglich äußerst schematisch und beispielhaft dargestellt ist, wirkt nach wie vor die Haltekraft im Bereich der Scheibenfüße 8, so dass die Bremsscheiben 3, 4 wieder elastisch in ihre Bremsscheibenebene zurückverformt werden bzw. zurückfedern und somit ein Lüftspiel 28 zwischen sich und den einzelnen Bremsbelägen ausbilden können. Konkret federn dabei bei einem Rückzug der Kolbeneinrichtung 27 mitsamt dem Bremsbelag 22 zuerst die beiden Bremsscheiben 3, 4 von den Bremsbelägen 19 und 23 zurück, so dass zwischen diesen ein entsprechend vorgegebenes Lüftspiel 28 ausgebildet wird. Durch das Zurückfedern der zweiten Bremsscheibe 4 wird gleichzeitig ein Impuls auf die mittlere Belagplatte 16 übertragen, die dadurch von der zweiten Bremsscheibe 4 weg in Richtung auf die erste Bremsscheibe 3 gedrückt wird und somit ein definiertes, vorgegebenes Lüftspiel 28 zwischen der zweiten Bremsscheibe 4 und der mittleren Belagplatte 16 bzw. dem zweiten mittleren Bremsbelag 20 ausbildet. Um sicherzustellen, dass die mittlere Belegplatte 16 mit ihrem Bremsbelag 19 dann nicht wieder in eine Anlageverbindung mit der Bremsscheibe 3 gelangt, und die Nabennuten 5 vorzugsweise so mit unterschiedlichen Winkeln ausgebildet wie in **Fig. 3** dargestellt, wodurch sichergestellt werden kann, dass die Bremsscheibe 3 über eine weitere Wegstrecke zurückverlagert wird als die Bremsscheibe 4.

Mit einem derartigen definierten Lüftspiel 28 lässt sich eine sehr gute Bremsscheibenabkühlung bei nicht betätigter Bremse erzielen.

Die Rückstellung der mittleren Belagplatte 16 kann auch in der in der **Fig. 2** dargestellten Art und Weise mittels der Ausbildung einer schräg verlaufenden Sattelnut an einem Sattelträger unterstützt werden, wie dies bereits zuvor ausführlich erläutert worden ist.

## Patentansprüche

1. Mehrscheibenbremse für Fahrzeuge, insbesondere Doppelscheibenbremse für Kraftfahrzeuge, mit mehreren in Axialrichtung benachbarten und auf einer Nabe (2) verschiebbar gelagerten Bremsscheiben (3, 4), denen Bremsbeläge tragende Belagplatten (16) zugeordnet sind, die wenigstens zum Teil ebenfalls verschiebbar gelagert sind, wobei die Mehrscheibenbremse (1) Führungsmittel (5, 8, 25, 26) aufweist, mittels denen die während einer Bremsbetätigung in deren Reib- und Bremsstellung verlagerten Bremsscheiben (3, 4) und/oder Belagplatten (16) bei einem Lösen der Bremse in eine Stellung überführbar sind, in der ein definiertes Lüftspiel (28) zwischen den Bremsscheiben (3, 4) und den Bremsbelägen (19, 20, 22, 23) ausgebildet ist, **dadurch gekennzeichnet, dass** die Führungsmittel (5, 8, 25, 26) zwischen der Nabe (2) und den Bremsscheiben (3, 4) und/oder zwischen den Belagplatten (16) und einer Bremssatteleinrichtung (15) so ausgebildet und/oder angeordnet sind, dass die Bremsscheiben (3, 4) und/oder Belagplatten (16) in deren in die Reib- und Bremsstellung überführten Position elastisch verformt und vorgespannt sind und beim Lösen der Bremse in ihre definierte Lüftspiel-Stellung zurückfedern und/oder zurückgleiten.

2. Mehrscheibenbremse nach Anspruch 1, **dadurch gekennzeichnet,**
**dass** die Nabe (2) an ihrer Außenfläche voneinander beabstandete Nabennuten (5) aufweist, die als schräg verlaufende Nabennuten (5) unter einem vorgegebenen Winkel gegen eine zur Rotationsachse (6) der Nabe (2) achsparallele Längsachsenrichtung geneigt sind und sich im Wesentlichen in Verschieberichtung über die Nabe (2) erstrecken,
**dass** die Bremsscheiben (3, 4) im Bereich einer zentralen Scheibenöffnung (7) vorsprungartig ausgebildete Scheibenfüße (8) aufweisen, die verschiebbar in den Nabennuten (5) geführt und so an die Nabenutgeometrie formangepasst ausgebildet sind, dass diese bei einer Bremsenbetätigung nach einem vorgegebenen Verschiebeweg in einer vorgegebenen Scheibenfußposition gehalten sind, während der sich an den Scheibenfuß (8) anschließende Bremsscheibenbereich unter elastischer Verformung weiterverlagerbar ist, und
**dass** die zwischen benachbarten Scheibenfüßen (8) liegenden Scheibenöffnungsbereiche (9), insbesondere Scheibenöffnungs-Grundkreisbereiche, jeweils einen vorgegebenen Spaltabstand (10) zu den diesen jeweils zugeordneten und zwischen benachbarten Nabennuten (5) liegenden, erhabenen Nabenstegen (11) der Nabenaußenfläche aufweisen.

3. Mehrscheibenbremse nach Anspruch 2, **dadurch gekennzeichnet, dass** an den Scheibenfüßen (8) wenigstens ein Federelement (12) angeordnet ist, das mit einem Federteilbereich in einer Reibverbindung an wenigstens einem der an die jeweilige Nabennut (5) angrenzenden, erhabenen Nabenstege (11) anliegt.

4. Mehrscheibenbremse nach Anspruch 2 oder 3, **dadurch gekennzeichnet, dass** die schräg verlaufenden Nabennuten (5) mehrere, vorzugsweise zwei, mit unterschiedlichen Winkeln gegen die Längsachsenrichtung (6) der Nabe (2) geneigte und in Richtung ihrer Längserstreckungsrichtung aneinander anschließende Nutteilbereiche (13, 14) aufweisen.

5. Mehrscheibenbremse nach Anspruch 4, **dadurch gekennzeichnet, dass** der näher in Richtung einer Kolbeneinrichtung (27) zur Betätigung der Mehrscheibenbremse (1) liegender Nutteilbereich (13) einen größeren Winkel einschließt als der sich daran in eine Richtung von der Kolbeneinrichtung (27) weg anschließende Nutteilbereich (14).

6. Mehrscheibenbremse nach einem der Ansprüche 1 bis 5, **dadurch gekennzeichnet,**
**dass** die verlagerbaren Belagplatten (16) verschiebbar an einer Bremssatteleinrichtung (15) gelagert sind,
**dass** die Bremssatteleinrichtung (15) eine der verlagerbaren Belagplatten (16) zugeordnete und sich entlang der Bremssatteleinrichtung (15) erstreckende Sattelnut (15) aufweist, die als schräg verlaufende Sattelnut (25) unter einem vorgegebenen Winkel gegen eine zur Rotationsachse (6) der Nabe (2) achsparallele Längserstreckungsrichtung der Bremssatteleinrichtung (15) geneigt ist, und
**dass** die verlagerbaren Belagplatten (16) einen vorsprungartig ausgebildeten Plattenfuß (26) aufweist, der verschiebbar in der Sattelnut (25) geführt und so an die Sattelnutgeometrie formangepasst ausgebildet ist, dass dieser bei einer Bremsbetätigung nach einem vorgegebenen Verschiebeweg in einer vorgegebenen Plattenfußposition gehalten ist, während der sich an den Plattenfuß (26) anschließende Bremsscheibenbereich unter elastischer Verformung weiterverlagerbar ist.

7. Mehrscheibenbremse nach Anspruch 6, **dadurch gekennzeichnet,**
**dass** die Bremssatteleinrichtung (15) Plattenträger aufweist, entlang denen die verlagerbaren Belagplatten (16, 17) mit von der jeweiligen Belagplatte (16, 17) wegragenden Plattenarmen verschiebbar geführt sind, und
**dass** die Bremssatteleinrichtung (15) ferner einen, insbesondere einer Kolbeneinrichtung (27) der Mehrscheibenbremse (1) zugeordneten Sattelträger (24) aufweist, der im montierten Zustand vorzugsweise seitlich neben der verlagerbaren Belagplatte (16) liegt und die Sattelnut (25) aufweist.

8. Mehrscheibenbremse nach einem der Ansprüche 1 bis 7, **dadurch gekennzeichnet,**
**dass** die Mehrscheibenbremse als Doppelscheibenbremse (1) mit zwei verlagerbaren Bremsscheiben (3, 4) ausgebildet ist,
**dass** im Bremsscheibenzwischenraum zwischen den beiden Bremsscheiben (3, 4) eine verlagerbare, mittlere Belagplatte (16) angeordnet ist, die einen einer ersten Bremsscheibe (3) zugeordneten ersten mittleren Bremsbelag (19) und einen einer zweiten Bremsscheibe (4) zugeordneten zweiten mittleren Bremsbelag (20) trägt,
**dass** den beiden Bremsscheiben (3, 4) ferner auf ihrer dem Bremsscheibenzwischenraum abgewandten Seite jeweils eine einen Bremsbelag (22, 23) tragende äußere Belagplatte (17, 18) zugeordnet ist,
**dass** die Mehrscheibenbremse (1) ferner eine hydraulisch betätigbare Kolbeneinrichtung (27) zur Bremsbetätigung aufweist, mittels der die Bremsscheiben (3, 4) und die Bremsbeläge (19, 20, 22, 23) in eine Reibverbindung bringbar sind, in der die beiden Bremsscheiben (3, 4) und gegebenenfalls die mittlere Belagplatte (16) mit ihren jeweiligen in die Nuten (5, 25) eingreifenden Füßen (8, 26) mittels einer Fußhaltekraft in einer bestimmten Verschiebeposition gehalten sind, während der sich daran anschließende restliche Bremsscheiben- und Belagplattenbereich in Längsachsenrichtung (6) weiter verlagert und damit elastisch verformt ist, so dass bei einem anschließenden Lösen der Bremse die verformten Bereiche wieder zurückfedern und/oder -gleiten und das vorgegebene Lüftspiel (28) ausbilden.

## Claims

1. Multiple-disk brake for vehicles, particularly a double-disk brake for vehicles, with, in an axial direction, several adjacent brake disks (3, 4) that are supported, such that they can shift onto a hub (2), the brake linings of the said disk brakes having supporting covering plates (16), which are supported such that they can partially shift, assigned to them, whereby the multi-disk brake (1) has guide means (5, 8, 25, 26) by means of which the brake disks (3, 4) and or covering plates (16), which are displaced into their friction and braking position when the brake is operated, can be conveyed, when the brake is released, into a position in which a specific gap (28) is formed between the brake disks (3, 4) and the brake linings (19, 20, 22, 23), **characterized in that** the guide means (5, 8, 25, 26) are formed and/or disposed between the hub (2) and the brake disks (3, 4) and/or between the covering plates (16) and a brake calliper device (15) such that, when conveyed over into the friction and braking position, the brake disks (3, 4) and/or covering plates (16) are elastically deformed and pre-tensioned and spring and/or slide back into their specified air-gap setting, when the brake is released.

2. Multi-disk brake in accordance with claim 1, **characterized in that**
the hub (2) has hub notches (5), which are separated from each other, on its outer face, that are inclined, as sloping hub notches, at a set angle in relation to a lengthwise direction running axially parallel to the rotation axis (6) of the hub (2), and essentially extend, in the direction of displacement, over the hub (2),
**in that** the brake disks (3, 4) have projection-like disk bases (8), in the area of a central disk opening (7), that are supported such that they can be shifted into the hub notches (5) and are adapted, in their shape, to the form of the hub notch such that, when the brake is operated, the brake disks are, after a set shift displacement, held in a set disk base position, while the brake disk area adjoining the disk base (8) can, with elastic deformation, be further displaced, and
the disk opening areas (9), lying between adjacent disk bases (8), particularly disk-opening base circle areas, in each case have a set separation (10) in relation to the raised hub crosspieces (11), of the outer face of the hub, lying between adjacent hub notches (5).

3. Multi-disk brake in accordance with claim 2, **characterized in that** at least one spring element (12), which lies, with one spring section, in frictional contact on at least one of the raised hub crosspieces (11) adjoining the given hub notch (5), is disposed on the disk bases.

4. Multi-disk brake in accordance with claims 2 or 3, **characterized in that** the inclined hub notches (5) have several, preferably two, adjoining notch areas (13, 14) that are inclined, with different angles, in relation to the lengthwise direction (6) of the hub (2).

5. Multi-disk brake in accordance with claim 4, **characterized in that** the nearer notch area (13), as seen in the direction of a piston device (27) for operating the multi-disk brake (1), encloses a larger angle than the notch area (14) that adjoins as seen in a direction going away from the piston device (27).

6. Multi-disk brake in accordance with one of claims 1 to 5, **characterized in that**
the displaceable covering plates (16) are supported, such that they can shift, on a brake calliper device (15),
the brake calliper device (15) has, associated with the displaceable covering plates (16) and extending along the said brake calliper device (15), a saddle-type groove (15) that as an inclined saddle-type groove (25), is inclined at a set angle in relation to the direction of extension of the brake calliper device (15) running parallel to the rotation axis (6) of the hub (2), and
the displaceable covering plates (16) have a projection-like plate base (26) that is guided into the saddle-type groove (25) and is adapted to the form of the saddle-type groove such that when the brake is operated the plate base is, after a certain displacement, held in a set plate-base position, while the brake disk area adjoining the plate base (26) can, with elastic deformation, be further displaced.

7. Multi-disk brake in accordance with claim 6, **characterized in that**
the brake calliper device (15) has plate supports along which the displaceable covering plates (16, 17) are movably guided with the plate arms projecting from the given covering plate (16, 17) and
the brake calliper device (15) further has a saddle-type element support (24) associated, in particular, with a piston device (27) of the multi-disk brake (1), the said saddle-type element support (24) preferably lying, in the mounted position, laterally alongside the displaceable covering plate (16), and has the saddle-type groove (25).

8. Multi-disk brake in accordance with one of claims 1 to 7, **characterized in that**
the multi-disk brake is in the form of a double-disk brake (1) with two displaceable brake disks (3, 4),
a central covering plate (16) is disposed, in the intermediate space between the brake disks, between the two brake disks (3, 4), the said central covering plate carrying a first central brake lining (19), associated with the first brake disk (3), and a second central brake lining (20) assigned to a second brake disk (4),
the two brake disks (3, 4) further each have, on their side facing away from the intermediate space between the brake disks, an outer covering plate (17, 18) associated with them and carrying a brake lining (22, 23),
the multi-disk brake (1) further has a hydraulically operable piston device (27) for operating the brake and by means of which the brake disks (3, 4) and the brake linings (19, 20, 22, 23) can be brought into frictional connection in which both brake disks (3, 4) and, where applicable, the central covering plate (16) are held, with their given bases (8, 26) engaging in the notches or grooves (5, 25), by means of a cohesion of the bases, in a certain displaced position, while the remainder of the adjoining brake plate and covering plate area is further supported in a lengthwise direction (6) and is thereby elastically deformed such that with subsequent release of the brake, the deformed areas spring and/or slide back again and form the set gap (28).

## Revendications

1. Frein multidisques pour véhicules, notamment frein double disque pour véhicules automobiles, comprenant plusieurs disques de frein (3, 4) adjacents dans la direction axiale et logés de manière mobile sur un moyeu (2), auxquels sont associées des plaques de garniture (16) portant des garnitures de frein qui sont logées aussi de manière mobile au moins en partie, le frein multidisques (1) comprenant des moyens de guidage (5, 8, 25, 26), au moyen desquels les disques de frein (3, 4) et/ou les plaques de garniture (16) déplacés dans leur position de friction et de freinage, lorsque le frein est actionné, peuvent passer, lorsque le frein est relâché, dans une position dans laquelle un jeu d'armature (28) défini est réalisé entre les disques de frein (3, 4) et les garnitures de frein (19, 20, 22, 23), **caractérisé en ce que** les moyens de guidage (5, 8, 25, 26) sont conçus et/ou disposés entre le moyeu (2) et les disques de frein (3, 4) et/ou entre les plaques de garniture (16) et un système d'étrier de frein (15) de sorte que les disques de frein (3, 4) et/ou les plaques de garniture (16) sont déformés et précontraints élastiquement dans leur situation de passage en position de friction et de freinage et lorsque le frein est relâché, reviennent comme un ressort et/ou en glissant dans leur position de jeu d'armature définie.

2. Frein multidisques selon la revendication 1, **caractérisé en ce que**
le moyeu (2) comprend sur sa surface extérieure des rainures de moyeu (5) espacées les unes des autres, qui sont inclinées en tant que rainures de moyeu (5) s'étendant de manière oblique suivant un angle prédéfini dans le sens inverse d'une direction axiale longitudinale parallèle à l'axe par rapport à l'axe de rotation (6) du moyeu (2) et s'étendent sensiblement dans la direction de déplacement au-dessus du moyeu (2),
**en ce que** les disques de frein (3, 4) comprennent dans la zone d'une ouverture de disque centrale (7) des pieds de disque (8) conçus à la façon d'une saillie, qui sont guidés de manière mobile dans les rainures de moyeu (5) et conçus avec une forme adaptée à la géométrie de la rainure de moyeu, de sorte que ceux-ci sont maintenus, lorsque le frein est actionné, après un trajet de déplacement prédéfini, dans une position de pied de disque prédéfinie, tandis que la zone de disque de frein se raccordant au pied de disque (8) peut continuer d'être déplacée sous l'action d'une déformation élastique, et.
**en ce que** les zones d'ouverture de disque (9) situées entre les pieds de disque (8) adjacents, en particulier les zones circulaires de base de l'ouverture de disque, comprennent respectivement une distance intersticielle (10) prédéfinie par rapport aux nervures de moyeu (11) surélevées de la surface extérieure du moyeu, respectivement associées à celles-ci et situées entre les rainures de moyeu (5) adjacentes.

3. Frein multidisques selon la revendication 2, **caractérisé en ce qu'**au moins un élément formant ressort (12) est disposé sur les pieds de disque (8), lequel élément se situe avec une zone partielle de ressort en relation de friction contre au moins une des nervures de moyeu (11) surélevée, adjacente à la rainure de moyeu (5) respective.

4. Frein multidisques selon la revendication 2 ou 3, **caractérisé en ce que** les rainures de moyeu (5) s'étendant de manière oblique comprennent plusieurs, de préférence deux zones partielles de rainure (13, 14), inclinées suivant différents angles contre la direction axiale longitudinale (6) du moyeu (2) et raccordées les unes aux autres dans le sens de leur direction d'extension longitudinale.

5. Frein multidisques selon la revendication 4, **caractérisé en ce que** la zone partielle de rainure (13) plus proche en direction d'un système de piston (27) destiné à actionner le frein multidisques (1) enferme un angle supérieur à celui de la zone partielle de rainure (14) raccordée à celle-ci dans une direction s'éloignant du système de piston (27).

6. Frein multidisques selon l'une quelconque des revendications 1 à 5, **caractérisé en ce que**
les plaques de garniture mobiles (16) sont logées de manière à pouvoir être déplacées sur un système d'étrier de frein (15),
**en ce que** le système d'étrier de frein (15) comprend une rainure d'étrier (15) associée aux plaques de garniture mobiles (16) et s'étendant le long du système d'étrier de frein (15), laquelle rainure en tant que rainure d'étrier (25) s'étendant de manière oblique est inclinée suivant un angle prédéfini dans le sens inverse d'une direction d'extension longitudinale du système d'étrier de frein (15) parallèle à l'axe par rapport à l'axe de rotation (6) du moyeu (2), et
**en ce que** les plaques de garniture mobiles (16) comprennent un pied de plaque (26) conçu à la façon d'une saillie, qui est guidé de manière mobile dans la rainure d'étrier (25) et conçu avec une forme adaptée à la géométrie de la rainure de l'étrier, de sorte que celui-ci est maintenu, lorsque le frein est actionné, après un trajet de déplacement prédéfini, dans une position de pied de plaque prédéfinie, tandis que la zone de disque de frein raccordée au pied de plaque (26) peut continuer d'être déplacée sous l'action d'une déformation élastique.

7. Frein multidisques selon la revendication 6, **caractérisé en ce que**
le système d'étrier de frein (15) comprend des supports de plaque le long desquels les plaques de garniture mobiles (16, 17) sont guidées de manière à pouvoir se déplacer avec les bras de plaque dépassant à distance de la plaque de garniture (16, 17) respective, et
**en ce que** le système d'étrier de frein (15) comprend en outre un support d'étrier (24) associé en particulier à un système de piston (27) du frein multidisques (1), lequel support se situe à l'état monté de préférence latéralement à côté de la plaque de garniture mobile (16) et comprend la rainure d'étrier (25).

8. Frein multidisques selon l'une quelconque des revendications 1 à 7, **caractérisé en ce que**
le frein multidisques est conçu comme un frein double disque (1) comprenant deux disques de frein mobiles (3, 4),
**en ce qu'**une plaque de garniture centrale mobile (16) est disposée dans l'espace intermédiaire des disques de frein entre les deux disques de frein (3, 4), laquelle plaque porte une première garniture de frein centrale (19) associée à un premier disque de frein (3) et une seconde garniture de frein centrale (20) associée à un second disque de frein (4),
**en ce que** respectivement une plaque de garniture extérieure (17,18) portant une garniture de frein (22,23) est associée en outre aux deux disques de frein (3,4) sur son côté opposé à l'espace intermédiaire de disque de frein,
**en ce que** le frein multidisques (1) comprend en outre un système de piston (27) hydrauliquement actionnable destiné à actionner le frein, au moyen duquel les disques de frein (3,4) et les garnitures de frein (19,20,22,23) peuvent être amenés en liaison de friction, dans laquelle les deux disques de frein (3,4) et éventuellement la plaque de garniture centrale (16) sont maintenus avec leurs pieds (8,26) respectifs se mettant en prise dans les rainures (5,25) au moyen d'une force de maintien de pied dans une position de déplacement définie, tandis que la zone de disque de frein et de plaque de garniture restante raccordée à ceux-ci continue d'être déplacée dans la direction axiale longitudinale (6) et est de ce fait déformée élastiquement, de sorte que lorsque le frein est ensuite relâché, les zones déformées reviennent à nouveau comme un ressort et/ou en glissant et réalisent le jeu d'armature (28) prédéfini.
